# EUROPEAN PATENT APPLICATION

(11) **EP 2 022 558 A2**
(43) Date of publication of application: **11.02.2009**
(21) Application number: 08160991.9
(22) Date of filing: 23.07.2008
(51) Int. Cl.: B01J 8/06, C01B 3/38, H01M 8/06

(54) **Multi-tube fuel reformer with augmented heat transfer**

(30) Priority: 07.08.2007 US 890584
(71) Applicant: Delphi Technologies, Inc., Troy, Michigan 48007 (US)
(72) Inventor: Fischer, Bernhard A., Rochester, NY 14618 (US); England, Diane M., Bloomfield, NY 14469 (US); Ranelli, David J., West Henrietta, NY 14586 (US)
(74) Representative: Denton, Michael John

(57) **Abstract**

A catalytic reformer assembly including a reactor comprising a plurality of parallel tubes arranged within a tubular housing. A metal substrate, formed preferably as a metal foam lattice, is brazed to the tubes on both their inside and outside surfaces. A catalytic washcoat is applied to the metal substrate within the tubes, defining thereby the tubes as individual catalytic reforming reactors. Endothermic reforming reactions within the tubes are supported by heat from hot combustor exhaust flowing around the tubes in contact with the augmenting heat transfer metal substrates outside the tubes. Radial temperature gradients are small because of excellent heat transfer across the tube walls, resulting in excellent mechanical stability of the washcoat on the metal substrate. Preferably, the tubes are formed of Inconel 625 and the metal substrate is formed of Fecralloy^{®}, a high temperature alloy having excellent thermal conductivity and oxidation resistance.

## Description

### TECHNICAL FIELD

The present invention relates to catalytic hydrocarbon fuel reformers for converting a hydrocarbon stream to a gaseous reformate fuel stream comprising hydrogen; more particularly, to fuel reformers having heat exchange capability; and most particularly to a multi-tube endothermic fuel reformer having a high surface area metal substrate attached to both the insides and the outsides of the reforming tubes to augment heat transfer to the reforming catalyst. The present invention is useful for providing reformate as a fuel to a fuel cell, especially a solid oxide fuel cell, or to an internal combustion engine.

### BACKGROUND OF THE INVENTION

A catalytic hydrocarbon fuel reformer containing a fuel reforming catalytic reactor converts a fuel stream comprising, for example, natural gas, light distillates, methanol, propane, naphtha, kerosene, gasoline, diesel fuel, or combinations thereof, and air, into a hydrogen-rich reformate fuel stream comprising a gaseous blend of hydrogen, carbon monoxide, and nitrogen (ignoring trace components). In a typical reforming process, the raw hydrocarbon is percolated with oxygen in the form of air through a catalyst bed or beds contained within one or more reactor tubes mounted in a reformer vessel. The catalytic conversion process is typically carried out at elevated catalyst temperatures in the range of about 700°C to about 1000°C.

The produced hydrogen-rich reformate stream may be used, for example, as the fuel gas stream feeding the anode of an electrochemical fuel cell. Reformate is particularly well suited to fueling a solid-oxide fuel cell (SOFC) system because a purification step for removal of carbon monoxide is not required as is the case for a proton exchange membrane (PEM) fuel cell system.

The reformate stream may also be used to fuel a spark-ignited (SI) engine, either alone or in combination with gasoline. Hydrogen-fueled vehicles are of interest as low-emissions vehicles because hydrogen as a fuel or a fuel additive can significantly reduce air pollution and can be produced from a variety of fuels. As a gasoline additive, controlled amounts of supplemental hydrogen fuel may allow conventional gasoline-fueled internal combustion engines to reach nearly zero emissions levels.

Prior art fuel reformers such as catalytic partial oxidation (CPOx) reformers have limitations in maximum obtainable reforming efficiency. Prior art CPOx endothermic reforming delivers maximum reforming efficiencies of between about 78% and 82% for DF2 diesel fuel, gasoline, or JP8 jet fuel, and up to about 84% for methane and natural gas, at usual reactant preheat temperatures of about 300°C. Only if the efficiency of an associated fuel cell stack is greater than 80% can such a system deliver overall system efficiencies of greater than about 30-35%. On the other hand, endothermic catalytic reformers using heat exchangers to boost the reforming temperature can deliver efficiencies of about 120%, which allow for fuel utilizations in the stack of 40-60% and overall system efficiencies greater than 35%. Such efficiencies require endothermic heat exchange construction having a) very high heat transfer capability; b) a large surface area for washcoat admission; c) high durability and long lifetime of the washcoat substrate; and d) high durability and long lifetime of the catalytic washcoat on the substrate.

Prior art endothermic reactors typically are formed of planar elements, some of which are known to have a plurality of small channels (microchannels) formed in the planar surfaces to increase surface area. Such reactors have shown maldistribution of heat and poor washcoat adhesion. During coating of the washcoat slurry onto the reactor surfaces, only small amounts of washcoat are picked up; the washcoat cannot be controlled as to where and how much of it will be deposited; and thermal differential expansion (TDE) of the base metal of the reactor and of the washcoat can cause the washcoat to spall off within a few minutes of the start of operation. To reduce the TDE problem, some prior art reactors are formed of expensive high temperature alloys, such as Haynes alloys. Prior art microchannel planar reactors are complex and expensive to design and fabricate; cannot be repaired after failure; and are susceptible to thermal imbalance and washcoat spalling.

What is needed in the art is a catalytic reforming reactor having a) very high heat transfer capability; b) a large surface area for washcoat admission; c) high durability and long lifetime of the washcoat substrate; and d) high durability and long lifetime of the catalytic washcoat on the substrate.

It is a primary object of the invention to provide a durable, less expensive endothermic hydrocarbon fuel reformer capable of substantially increasing fuel efficiencies.

### SUMMARY OF THE INVENTION

A catalytic reformer assembly includes a reactor comprising a plurality of parallel tubes arranged within a tubular housing. A metal substrate, formed as corrugated sheet metal, rolled wire mesh, wire gauze, or preferably a metal foam lattice, is attached as by brazing to the parallel tubes on both their inside and outside surfaces. A catalytic washcoat is applied to the metal substrate within the tubes, defining thereby the interiors of the tubes as catalytic reforming reactors. The endothermic reforming reactions within the tubes are supported by heat from hot combustor exhaust gas flowing around the tubes in contact with the augmenting heat transfer metal substrates outside the tubes. Radial temperature gradients are small because of excellent heat transfer across the tube walls, resulting in excellent mechanical stability of the washcoat on the metal substrate. Preferably, the tubes are formed of Inconel 625 and the metal substrate is formed of Fecralloy^{®}, a high temperature alloy having excellent thermal conductivity and oxidation resistance.

### BRIEF DESCRIPTION OF THE DRAWINGS

The present invention will now be described, by way of example, with reference to the accompanying drawings, in which:
FIG. 1 is a schematic drawing of a fuel cell system employing endothermic fuel reforming in accordance with the invention;
FIG. 2 is an elevational cross-sectional view of a multi-tube reformer reactor in accordance with the invention;
FIG. 3 is an isometric view of an idealized metal foam unit module in accordance with the invention;
FIG. 4 is a cross-sectional view of a metal foam lattice;
FIG. 5 is an isometric view of the tubes and surrounding metal foam for the reactor shown in FIG. 2;
FIG. 6 is an exploded isometric view of the reactor shown in FIG. 2;
FIG. 7 is an isometric view of an improved fuel reformer employing endothermic reforming in accordance with the drawing shown in FIG. 1; and
FIG. 8 is a graph showing laboratory performance of a reformer reactor in accordance with the invention when fueled by JP8 jet fuel.

### DESCRIPTION OF THE PREFERRED EMBODIMENT

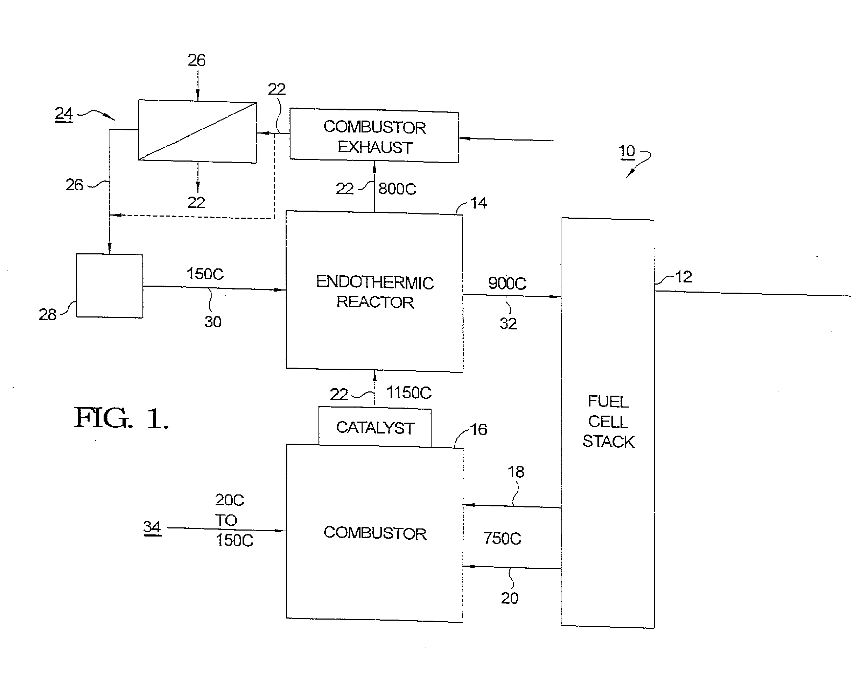

Referring to FIG. 1, a schematic drawing of a fuel cell system 10 employing endothermic fuel reforming in accordance with the invention includes a fuel cell stack 12, for example, a solid oxide fuel cell stack; an endothermic reforming reactor 14; a combustor 16 for burning tail gases 18 (anode) and 20 (cathode) from stack 12 to produce a combustor exhaust 22; and heat exchanger 24 for vaporizing incoming fuel 26 to be mixed with air, steam, and recycled anode tail gas 28.

In operation, incoming fuel 26 is vaporized by heat exchanged from combustor exhaust 22 either before or after being mixed with air, steam, and recycled anode tail gas 28. The flows of air, steam, and recycled anode tail gas are individually controlled and variable, as is known in the prior art of endothermic reforming. The resulting fuel stream 30, typically at a temperature of about 150°C, is fed to endothermic reactor 14 wherein reformate 32 is produced and supplied to stack 12 at a temperature of about 900°C. Stack 12 combines hydrogen and carbon monoxide in reformate 32 with oxygen from air (not shown) supplied to stack 12 to produce electricity, anode tail gas 18, and cathode tail gas 20, each at a temperature of about 750°C. Anode tail gas is rich in unreacted hydrogen and carbon monoxide, as well as water and carbon dioxide formed in the electrochemical reaction which produced electricity.

A first portion of anode tail gas 18 is supplied (not shown) to assist in forming fuel supply mixture 28.

Endothermic reforming conditions within reactor 14 are achieved by augmented heat transfer as described below. Combustor 16 receives a second portion of anode tail gas 18 and cathode tail gas 20 which form a combustible mixture that is ignited within combustor 16 to generate a hot exhaust 22 at a temperature of about 1150°C. The combustible mixture within combustor 16 may be enriched as desired by the addition of gaseous or pre-vaporized hydrocarbon fuel 34.

The generic use of combustor heat to assist in pre-heating of reformer reactants and the reforming reactor is known in the art. The improvement defined by the present invention is the arrangement, construction, and operation of the endothermic reformer reactor 14 to a) minimize radial thermal gradients between the inside and outside of the individual reactor tubes in order to minimize thermal stresses on the washcoat and thereby eliminate spalling of the washcoat from its substrate within the tubes; b) assure uniform distribution and high surface area of the washcoat on its substrate within the tubes; and c) provide reforming efficiencies in excess of 120%.

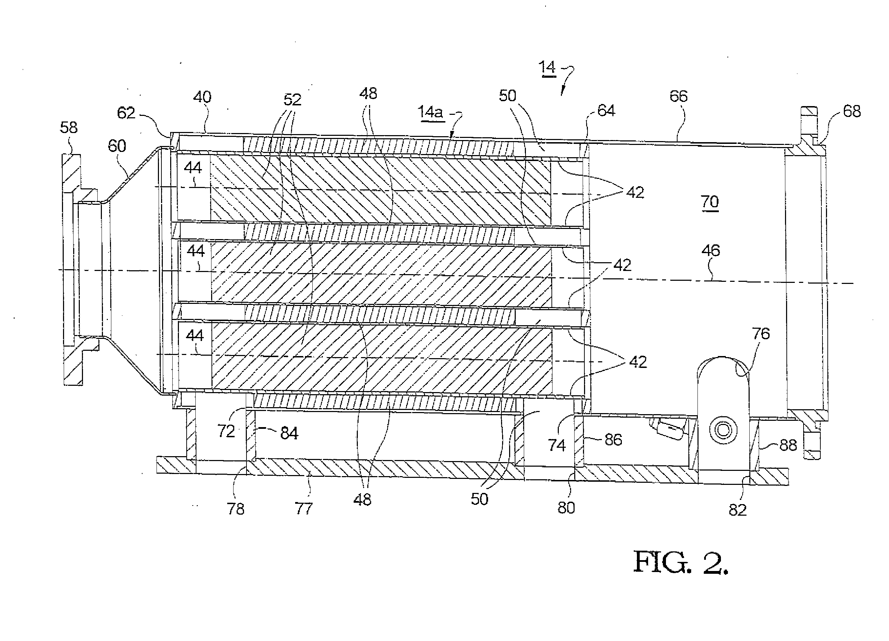

Referring now to FIGS. 2 through 6, a reforming reactor 14 improved in accordance with the invention comprises a preferably cylindrical housing 40 containing a plurality of generally parallel tubes 42, preferably 7 hexagonally arranged, each of which defines an individual reactor tube, the output of reactor 14 being the sum of the parallel outputs of the individual tubes 42. Preferably, the axes 44 of the individual tubes 42 are parallel to the axis 46 of the reactor 14.

Tubes 42 are formed of a high temperature alloy such as Inconel 625. In one aspect of the invention, tubes 42 are between about 4 inches and about 10 inches in overall length and between about ¼ inch and about 2 inches in outside diameter, depending upon requirements for reforming efficiency and electric power from the fuel cell stack. A first heat-transferring substrate 48 formed of corrugated rolled sheet metal, rolled wire mesh, wire gauze, or preferably a metal foam lattice surrounds tubes 42 in the inter-tube space 50 therebetween and is bonded to the tubes as by brazing or welding to provide a low-resistance heat transfer path from the substrate to the tubes. First substrate 48 is arranged such that a free path exists within space 50 for axial flow of combustor exhaust gases 22 as described below. Brazing with a high level of contact between the first substrate and the tubes is achieved by spray coating the bare tubes with braze material, installing the fist substrate in appropriate contact with the tubes, and then baking the assembly at an appropriate temperature to cause the braze material to liquefy and bond to the first substrate and the tubes at a large plurality of points.

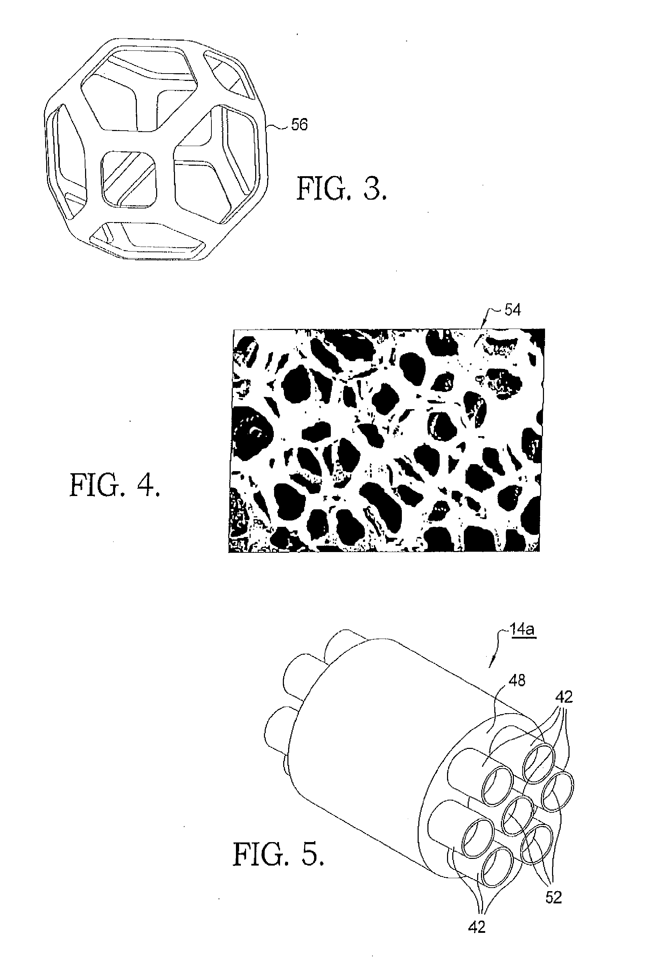

A second substrate 52 is installed within each of tubes 42 and preferably is similarly formed and bonded to the tubes in a fashion similar to the bonding of first substrate 48. The baking of the second substrates preferably is carried out with the baking of the first substrate to yield a reformer reactor subassembly 14a, as shown in FIG. 5.

Preferably, first and second substrates 48,52 are formed of the same material. Referring now to FIGS. 3 and 4, in one aspect of the invention, both first and second substrates 48,52 are formed of metal foam lattice 54 having a modular structure 56, idealized in FIG. 3. It is known, for example, to form such metal foams by first forming a mass of discrete globules of a sacrificial material such as carbon, then pouring molten metal into the interstices, allowing the metal to solidify, and then destroying the sacrificial material to leave a foam lattice. Such a metal foam lattice has very high porosity to gas flow while also having a very high specific surface area (area/volume). Thus first substrate 48 in space 50 defines a first heat exchanger for extracting heat from hot gas passing through space 50, as described below; and second substrate 52 defines a second heat exchanger for imparting heat transferred through the tube walls from space 50 to a fuel mixture passing through tubes 42. Presently preferred substrate foam materials are Inconel alloys, Haynes alloys, and Fecralloy® alloys.

A challenge in the use of metal foams, as in the present application, is increased oxidation promoted by the high specific surface area and high temperatures, which can lead to catastrophic failure of the material. The presently preferred material for forming a foam in accordance with the present invention is Fecralloy® alloy, available from Goodfellow Cambridge Limited, Huntingdon, England. This material is an alloy of iron, chromium, aluminum, yttrium, and zirconium.

After subassembly 14a is formed, second substrate 52 within the tubes is coated with a reforming catalyst material (not shown) in known fashion, preferably by liquid coating of a washcoat onto second substrate 52 followed by drying and sintering to adhere the catalyst material to the entire exposed surface area of substrate 52.

An added benefit of using Fecralloy® for the substrate, both inside and outside of the tubes, is that it has very high thermal conductivity, resulting in high heat transfer from gas in space 50 through the tube walls and into the reactor space within the tubes. Thus, there is a very low radial thermal gradient across the tube walls. As noted above, a serious problem in the prior art is that the catalyst material is easily spalled from the prior art substrate surfaces due to high thermal gradients imposed by low thermal conductivity of the substrate materials and large planar surface areas of the substrates.

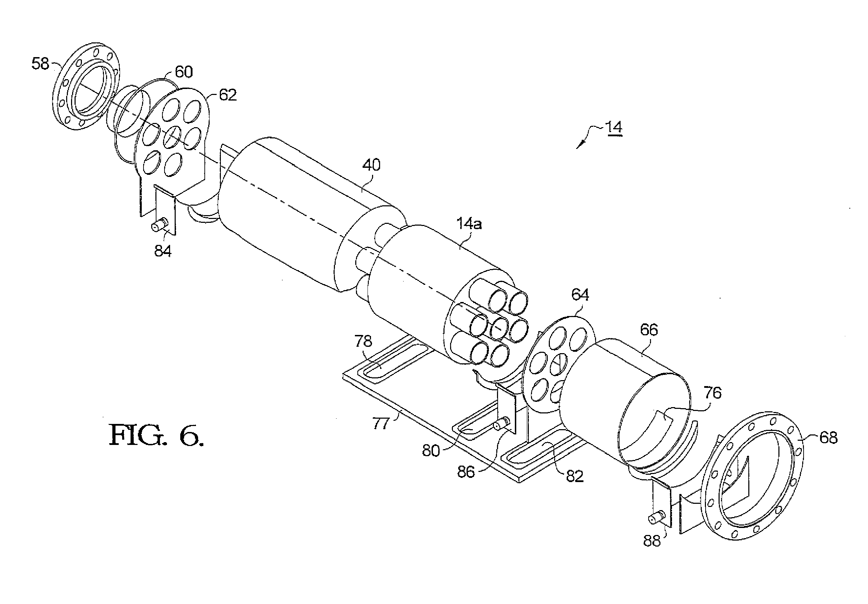

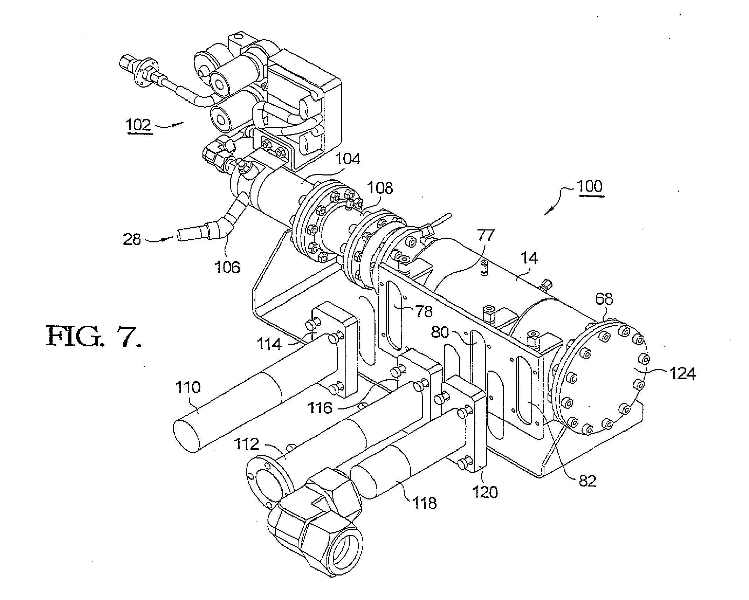

Referring now to FIGS. 2 and 6, a complete assembly 14 of a catalytic reforming reactor in accordance with the invention comprises subassembly 14a inserted into housing 40. An entry flange 58, cone distributor 60, and upstream separator 62 provide entry and distribution of a fuel mixture into tubes 42. Upstream separator 62 and downstream separator 64 cooperate with housing 40 to define flow space 50 for hot gases around tubes 42 as described below. Housing extension 66 is terminated by end flange 68 (for receiving a blank end plate 124, as shown in FIG. 7), defining an accumulation chamber 70 for reformate having exited tubes 42. Housing 40 and housing extension 66 are provided with openings 72,74,76 for passage of hot gas into and out of housing 14 and reformate out of housing extension 66, respectively. An adaptor plate 77 having openings 78,80,82 is spaced apart from housing 14 and housing extension 66 and is connected thereto by ducts 84,86,88.

Referring now to FIG. 7, a catalytic endothermic reformer 100 including a catalytic reactor 14 improved in accordance with the invention comprises a prior art assembly 102 for metering hydrocarbon fuel, air, and optionally steam into a mixing chamber 104 wherein recycled anode tail gas 28 is added via conduit 106. A start-up combustor 108 is positioned in known fashion between mixing chamber 104 and reactor 14 for ignition of a fuel/air mixture at the start-up of reformer operation to provide a charge of hot gas through the reactor tubes and catalyst to rapidly bring the reformer (and fuel cell stack) up to minimum operating temperature, in known fashion. First and second pipes 110,112 are connected via mounting flanges 114,116 to openings 78,80 respectively in adaptor plate 77. Third pipe 118 is connected via mounting flange 120 to opening 82 for exhaust of reformate from the reformer. A blank end plate 124 mounted to end flange 68 closes chamber 70 (FIG.2).

In operation, as shown in FIGS. 1 and 2 and partially described above, combustor exhaust 22 is passed through space 50 to heat up first substrate 48 for heat exchange into second substrate 52 in tubes 42. The reformer may be operated with combustor exhaust 22 flowing either in a) the same direction (co-flow, with pipe 110 as inlet and pipe 112 as outlet) as fuel mixture flowing through tubes 42, or b) the opposite direction (counter-flow, with pipe 112 as inlet and pipe 110 as outlet) from fuel mixture flowing through tubes 42. Co-flow will support faster heat up of the fuel mixture with lower outlet temperatures and lower overall heat transfer. Counter-flow will support faster transient start and heat up with higher outlet temperatures and overall higher heat transfer rates. System requirements will dictate the combustor exhaust flow configuration.

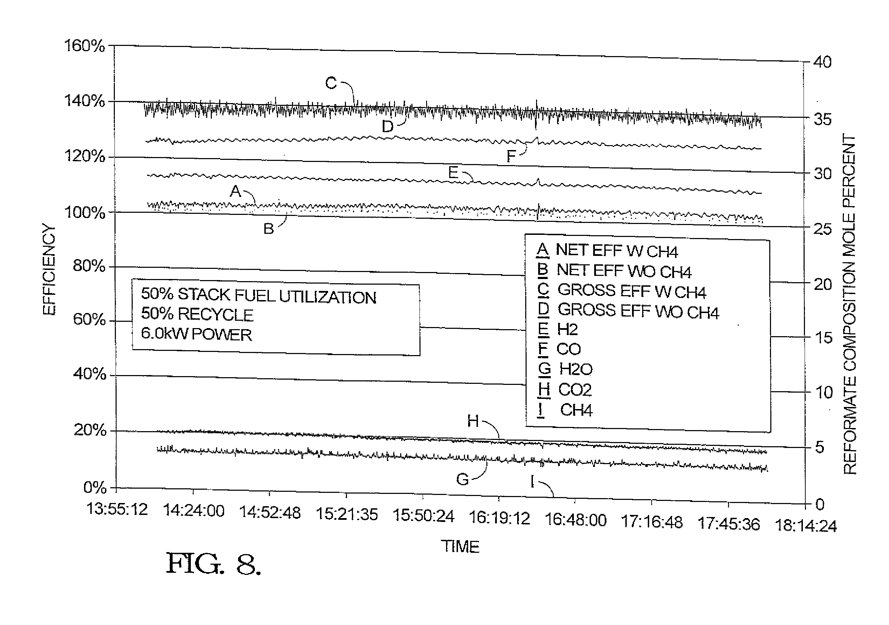

Referring to FIG. 8, performance of an improved catalytic endothermic reformer in accordance with the invention is shown over a period of more than 4 hours of constant operation on JP-8 jet fuel, with and without methane addition. Reformate utilization in an associated SOFC stack was 50%, the recycle rate of anode tail gas into the fuel mixture was 50%, and the stack was producing 6.0 kW of electric power.

It is seen that the gross efficiency of the reformer with methane (curve C) and without methane (curve D) is nearly 140%, clearly superior to prior art endothermic reformers that demonstrate only about 120% gross efficiency. The respective net efficiencies are shown in curves A and B. The mole percentages of components of the resulting reformate are shown for carbon monoxide (curve F), hydrogen (curve E), water (curve G), carbon dioxide (curve H), and methane (curve I).

The benefits of an improved endothermic reformer over prior art endothermic reformers may be summarized as follows:
1. The reformer may be plumbed for either co-flow or counter-flow of combustor exhaust, for highest efficiency in any given application.
2. Small radial temperature gradients promote long working life for the substrates and the catalyst washcoat.
3. Employing relatively few, large reforming tubes reduces cost and simplifies construction.
4. The combustor is external to the reformer, making it simpler to install and repair, and allowing for improvement in the combustor without redesign of the reformer; some prior art reformers include an integral combustor.
5. Use of Inconel 625 for the tubes reduces cost over prior art use of Haynes alloys.
6. The substrates are formed of high conductivity materials such as Inconel or Fecralloy.
7. Washcoat adhesion is much improved on the irregular latticework of the second substrate, with low impetus for thermal spalling.
8. The first and second substrates are readily brazed to the tubes for maximum heat transfer from the combustor exhaust to the fuel mixture.
9. The first and second substrates can be readily removed and replaced as may be required from time to time by melting out the braze.
10. New catalyst can be applied to the second substrate without requiring a new reactor.
11. The components may be either welded or brazed together.
12. The overall assembly is compact, relatively inexpensive, and easy to manufacture.
13. The design can be readily adjusted for different power range requirements simply by adding or removing tubes from the reactor design.

While the invention has been described by reference to certain preferred embodiments, it should be understood that numerous changes may be made within the spirit and scope of the inventive concepts described. Accordingly, it is intended that the invention not be limited to the disclosed embodiments, but that it have the full scope permitted by the language of the following claims.

## Claims

1. A catalytic reformer assembly for reforming hydrocarbon fuel to generate a hydrogen-containing reformate fuel, comprising a reactor including:
a) a plurality of side-by-side tubes defining parallel flow paths in a first direction through said tubes for reforming of a gaseous fuel mixture including said hydrocarbon fuel;
b) a first substrate disposed around said plurality of tubes defining a first heat exchanger for extracting heat from tempering gas when said tempering gas is passed through said first substrate;
c) a second substrate disposed within each of said tubes defining a second heat exchanger for imparting heat to said gaseous fuel mixture when said gaseous fuel mixture is passed through said second substrate;
wherein said second substrate is supportive of a catalytic material, and
wherein a portion of said heat extracted from said tempering gas is conductable by walls of said tubes from said first heat exchanger to said second heat exchanger.

2. A catalytic reformer assembly accordance with Claim 1 wherein said tempering gas is passed through said first substrate in said first direction defining a co-flow relationship of said tempering gas to said gaseous mixture.

3. A catalytic reformer assembly accordance with Claim 1 wherein said tempering gas is passed through said first substrate in a direction substantially opposite to said first direction defining a counter-flow relationship of said tempering gas to said gaseous mixture.

4. A catalytic reformer assembly in accordance with Claim 1 wherein the form of at least one of said first and second substrates is selected from the group consisting of corrugated sheet metal, rolled wire mesh, wire gauze, and a metal foam lattice.

5. A catalytic reformer assembly in accordance with Claim 1 wherein said first and second substrates are formed of the same material.

6. A catalytic reformer assembly in accordance with Claim 1 wherein at least one of said first and second substrates is formed of a material selected from the group consisting of an Inconel alloy, a Haynes alloy, and a Fecralloy alloy.

7. A catalytic reformer assembly in accordance with Claim 1 wherein at least one of said first and second substrates is formed of a material comprising iron, chromium, and aluminum.

8. A catalytic reformer assembly in accordance with Claim 1 wherein said reactor is an endothermic reactor.

9. A catalytic reformer assembly in accordance with Claim 1 wherein said gaseous mixture including said hydrocarbon fuel further includes water and anode tail gas.

10. A catalytic reformer assembly in accordance with Claim 1 wherein at least one of said first substrate or said second substrate is attached to said plurality of tubes.

11. A catalytic reformer assembly in accordance with Claim 1 wherein a method of attaching at least one of said first and second substrates to said plurality of tubes is selected from the group consisting of brazing and welding.

12. A catalytic reformer assembly in accordance with Claim 1 wherein said tubes are formed of Inconel 625 alloy.

13. A catalytic reformer assembly in accordance with Claim 1 further comprising a housing surrounding said tubes and said first substrate defining a flow space for flow of said tempering gas through said first substrate.

14. A catalytic reformer assembly in accordance with Claim 1 wherein said tempering gas is combustor exhaust resulting from combustion of anode tail gas from a fuel cell stack.

15. A solid oxide fuel cell system comprising:
a) a solid oxide fuel cell stack for producing electricity and anode tail gas;
b) a combustor for burning a portion of said anode tail gas for producing hot combustor exhaust; and
c) a catalytic reformer for reforming hydrocarbon fuel to generate a hydrogen-containing reformate fuel for said solid oxide fuel cell stack, said reformer including a reactor having
a plurality of side-by-side tubes defining parallel flow paths in a first direction through said tubes for a gaseous fuel mixture including said hydrocarbon fuel,
a first substrate disposed around said plurality of tubes defining a first heat exchanger for extracting heat from said combustor exhaust when said combustor exhaust is passed through said first substrate,
a second substrate disposed within each of said tubes defining a second heat exchanger for imparting heat to said gaseous fuel mixture when said gaseous fuel mixture is passed through said second substrate,
wherein said second substrate is supportive of a catalytic material, and
wherein a portion of said heat extracted from said combustor exhaust is conducted by walls of said tubes from said first heat exchanger to said second heat exchanger.

16. A solid oxide fuel cell assembly in accordance with Claim 15 wherein said combustor is non-integral with said catalytic reformer.
